# EUROPEAN PATENT SPECIFICATION

(11) **EP 0 441 631 B1**
(45) Date of publication and mention of the grant of the patent: **02.08.1995**
(21) Application number: 91301009.6
(22) Date of filing: 07.02.1991
(51) Int. Cl.: G11B 23/023

(54) **A video cassette case having hard plastic sheets on flat surfaces thereof**
Videokassettenbehälter mit harten Kunststoffolien versehenen Flanken
Boîtier comportant des feuilles de plastique dur sur ses flancs pour cassette vidéo

(30) Priority: 08.02.1990 JP 11824/90 U
(43) Date of publication of application: 14.08.1991
(73) Proprietor: SONY CORPORATION, Tokyo 141 (JP)
(72) Inventor: Ozaki, Hiroshi c/o Patents Division, Shinagawa-ku Tokyo 141 (JP)
(74) Representative: Cotter, Ivan John

(56) References cited:
- EP-A- 0 182 721
- DE-A- 3 313 964
- GB-A- 2 079 726

## Description

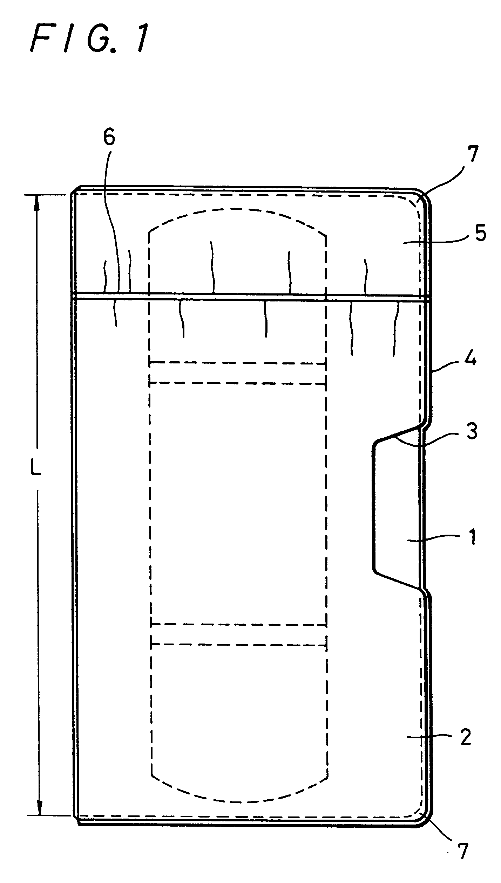

As a cassette case for accommodating therein a tape cassette such as a video cassette or the like, cassette cases made of a paper board or polypropylene (hereinafter simply referred to as PP) have been frequently utilized hitherto. Figure 1 of the accompanying drawings show a conventional video cassette case 2 for accommodating therein a video cassette. In this video cassette case 2 of substantially rectangular shape having a cassette inserting opening 4 formed on one side thereof and cassette withdrawing cutouts 3 formed in left and right side walls thereof, a video tape cassette 1 which has not yet been used, for example, can be inserted through the cassette inserting opening 4 into the video cassette case 2 to be housed therein. Then, the video cassette case 2 is covered over its whole surface with a packaging film 5 and the video cassette case 2 is shipped from the factory. In Figure 1, reference numeral 6 designates a peel tape which is used to peel the packaging film 5 from the whole surface of the video cassette case 2.

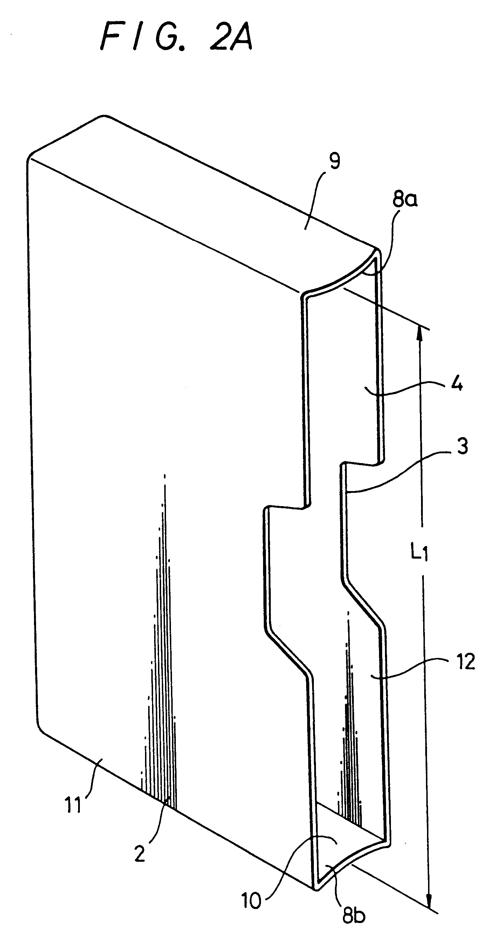

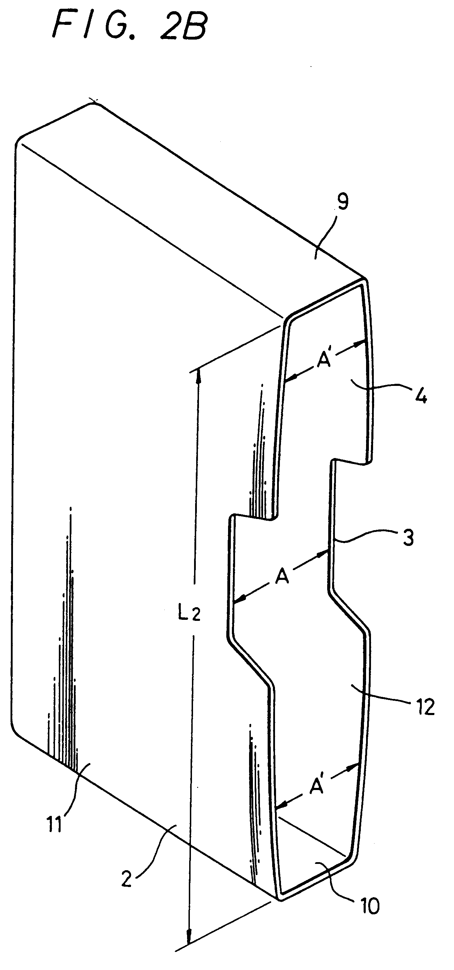

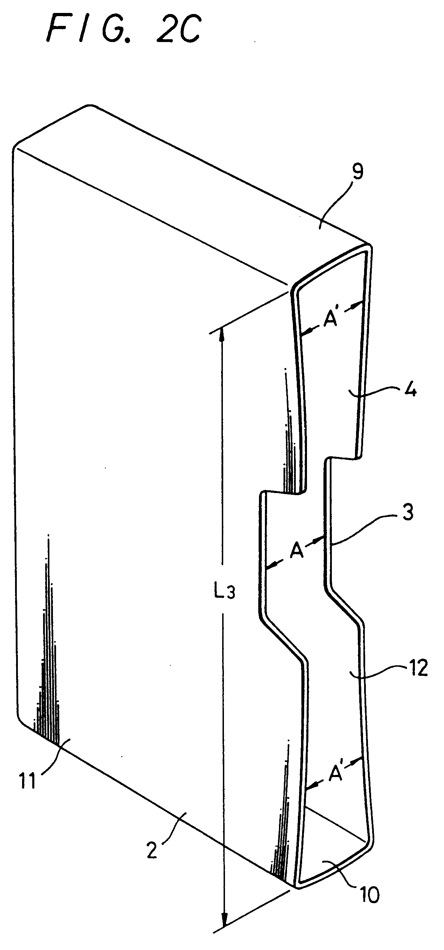

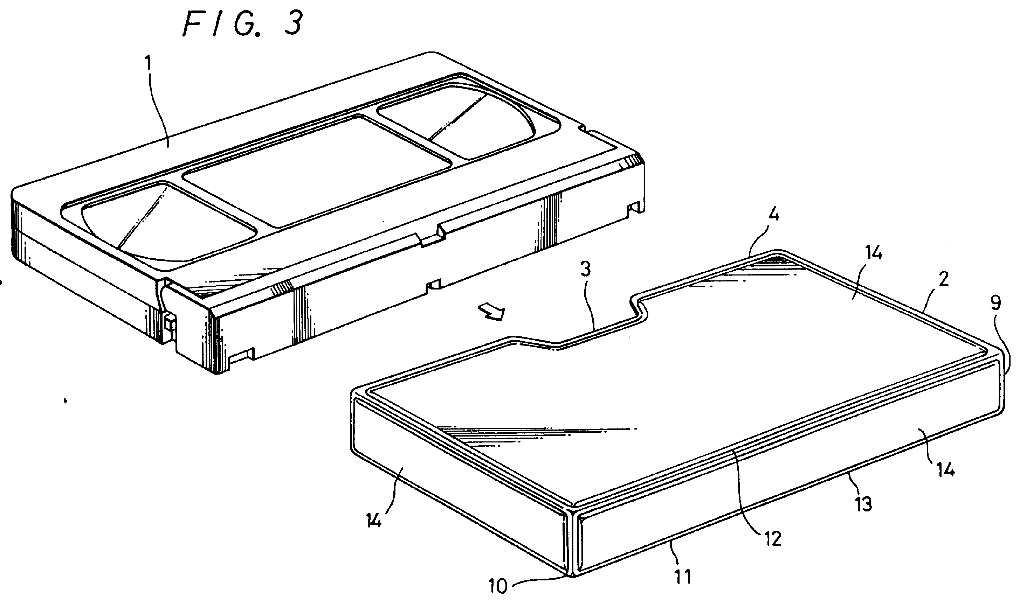

If the manufacturing cost of the video cassette case 2 made of paper board, PP and the like is reduced, then such video cassette case 2 will become thin and weak. For this reason, if gaps 7,7, ... exist between the video cassette case 2 and the video tape cassette 1, then the video cassette case 2 will be wrinkled due to contraction of the packaging film 5 as shown in Figures 2A, 2B and 2C. In the video cassette case 2 shown in Figure 2A, upper and lower side walls 9 and 10 are deformed to convex shapes 8a and 8b in the cassette insertion opening 4 due to the packaging film 5 and a distance L₁ between vertexes of these convex shapes 8a and 8b becomes shorter than a length L (see Figure 1) of the longitudinal direction of the video tape cassette 1, which makes it difficult to re-insert the video tape cassette 1 into the video cassette case 2. Similarly, in the video cassette case 2 shown in Figure 2B, the width of the cassette insertion opening 4 is increased at its central portion between the left and right side walls 11 and 12 so that a width A of the cassette insertion opening 4 at its central portion is increased as compared with the widths A′ of the insertion opening 4 at its upper and lower portions. In the video cassette case 2 shown in Figure 2C, the width A of the cassette insertion opening 4 at its central portion is reduced as compared with the widths A′ of the insertion opening 4 at its upper and lower portions. In either case, the sizes L₁, L₂ and L₃ in the longitudinal direction of the video cassette case 2 become smaller than the size L in the longitudinal direction of the video tape cassette 1. Also, the sizes A′ of the insertion opening 4 at its upper and lower portions shown in Figure 2B and the size A of the insertion opening 4 at its central portion shown in Figure 3C become smaller than the lateral width of the video tape cassette 1. There is then the disadvantage that it becomes difficult to insert the video tape cassette 1 into the video cassette case 2 through the cassette insertion opening 4.

According to the invention there is provided a video cassette case having a substantially rectangular shape and having a cassette inserting opening formed at one side thereof
characterised by reinforcing sheets laminated to each of the outer surfaces of the cassette case, wherein the reinforcing sheets are so dimensioned as to leave an unreinforced margin along the folding zones of the cassette case and the reinforcing sheets are formed from a material harder than the video cassette case itself.

Such a video cassette case can be protected from deformations such as distortion or the like in the vicinity of the cassette insertion opening even when covered with a packaging film.

The invention is diagrammatically illustrated by way of example in the accompanying drawings, in which:
Figure 1 is a plan view of a video cassette case of previously proposed kind;
Figures 2A to 2C are perspective views, respectively, of a video cassette case of the kind shown in Figure 1 showing various deformed states of the video cassette case;
Figure 3 is a perspective view illustrating an embodiment of a video cassette case according to the invention and a video tape cassette to be housed in the video cassette case; and
Figures 4A, 4B and 4C are schematic diagrams used to explain an assembly-process of the embodiment of the video cassette case according to the invention, respectively.

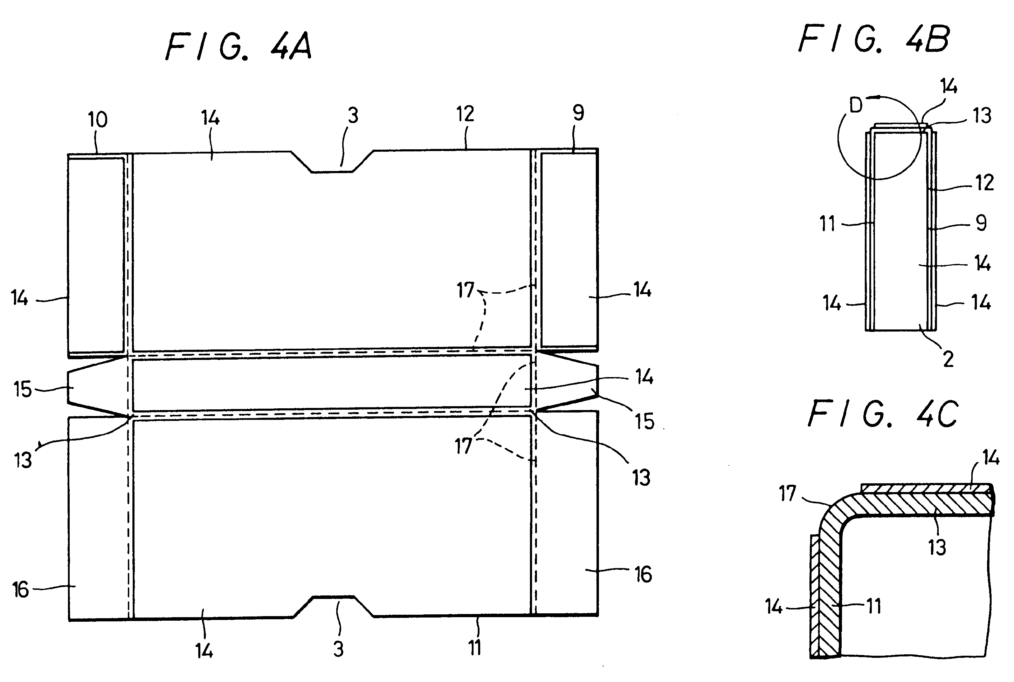

Referring to Figure 3 and Figures 4A to 4C. In Figure 3 and Figures 4A to 4C, like parts corresponding to those of Figure 1 and Figures 2A to 2C are marked with the same references and therefore need not be described in detail. A video cassette case 2, into the from which a video tape cassette 1 can be freely inserted and taken out, is made of paper board, soft plastics, white or transparent PP. The video cassette case 2 has upper, lower, left, right and rear walls 9, 10, 11, 12 and 13 respectively and is substantially rectangular in shape so as to allow the video tape cassette 1 to be accommodated therein through its cassette insertion opening 4.

To this end, the paper board or the PP is cut out as, for example, shown by an expansion in Figure 4A. As shown in Figure 4A, tabs 15, 15 are provided on left and right sides of the rear wall 13 in addition to the upper, lower, left, right and rear side walls 9, 10, 11, 12 and 13, and further, tabs 16, 16 are formed, for example, on both sides of the left side wall 11. Then, reinforcing sheets 14, 14, ... are stuck to parts except for bending zones 17 shown by broken lines on the left and right side walls 11, 12, the rear side wall 13 and the upper and lower side walls 9, 10 to laminate the same on the outer side of the paper board or PP. When the video cassette case 2 is made of PP, the reinforcing sheets 14, 14, ... may be made of a hard film-shaped polyvinyl chloride (PVC) or a PVC film containing about 5% of plasticizer.

Further, when the video cassette case 2 is made of paper board, the reinforcing sheets 14, 14, ... may be made of a soft film-shaped PVC containing about 30 to 50% of plasticizer. Alternatively, a synthetic resin such as polystyrene may be coated or laminated. The reinforcing sheets 14, 14, ... may be stuck on the upper, lower, left, right and rear side walls 9, 10, 11, 12 and 13 except for the tabs 15, 15 and 16, 16 while the bending zone 17 may be cut out in a V-letter shape.

Further, a pattern may be printed on the reinforcing sheets 14, 14, ... or a pattern or the like may be printed on the walls beneath the reinforcing sheets and the reinforcing sheets 14, 14, ... made transparent, thereby obtaining a video cassette case having a novel appearance with respect to the prior art. If the reinforcing sheets 14, 14, ... are made transparent, then a print provided on the walls beneath them can be prevented from being peeled off.

When, if the base boards of the video cassette case 2 on which the reinforcing sheets 14, 14, ... are laminated are bent about the bending zones 17, 17 as shown in Figure 4B and the upper and lower side walls 9, 10 are stuck or melted at the margins 15, 15, 16 and 16 by a paste or hot melt-process, the video cassette case 2 is obtained. In that case, as shown in Figure 4C which is an enlarged view of a portion D in Figure 4B, each of the bending zones 17 is made only of a relatively soft paper board or soft PP and has no reinforcing sheet 14 made of hard PVC or the like provided thereon so that the bending about each of the bending portions 17 can be carried out with ease.

Such a video cassette case can avoid the disadvantage that the cassette insertion opening is deformed by the packaging film when the packaging film is contracted.

While the video cassette case is shown formed by bending the respective parts in the above-mentioned embodiment, the reinforcing sheet may be laminated on a video cassette case which has been moulded by a compression moulding process or a blow moulding process.

## Claims

1. A video cassette case (2) having a substantially rectangular shape and having a cassette inserting opening (4) formed at one side thereof
characterised by reinforcing sheets (14) laminated to each of the outer surfaces of the cassette case, wherein the reinforcing sheets (14) are so dimensioned as to leave an unreinforced margin along the folding zones (17) of the cassette case (2) and the reinforcing sheets (14) are formed from a material harder than the video cassette case (2) itself.

2. A video cassette case according to claim 1, wherein the video cassette case (2) is made of polypropylene.

3. A video cassette case according to claim 2, wherein the reinforcing sheets (14) are made of hard polyvinyl chloride.

4. A video cassette case according to claim 3, wherein the hard polyvinyl chloride contains about 5% of plasticizer.

5. A video cassette case according to claim 1, wherein the video cassette case (2) is made of a paper board.

6. A video cassette case according to claim 5, wherein the reinforcing sheets (14) are made of soft polyvinyl chloride containing 30 to 50% of plasticizer.

## Patentansprüche

1. Videokassettengehäuse (2) mit einer im wesentlichen Quader-Form, das eine Kassetteneinführungsöffnung (4) aufweist, die auf einer Seite gebildet ist
gekennzeichnet durch Verstärkungsfolien (14), die auf jeder der äußeren Oberflächen des Kassettengehäuses schichtartig aufgebracht sind, wobei die Verstärkungsfolien (14) so dimensioniert sind, daß sie eine nichtverstärkte Grenze entlang der Faltzonen (17) des Kassettengehäuses (2) lassen, und die Verstärkungsfolien (14) aus einem Material gebildet sind, das härter ist als das Videokassettengehäuse (2) selbst.

2. Videokassettengehäuse nach Anspruch 1, wobei das Videokassettengehäuse (2) aus Polypropylen besteht.

3. Videokassettengehäuse nach Anspruch 2, wobei die Verstärkungsfolien (14) aus Hart-Polyvinylchlorid bestehen.

4. Videokassettengehäuse nach Anspruch 3, wobei das Hart-Polyvinylchlorid ungefähr 5% eines Plastifizierungsmittels enthält.

5. Videokassettengehäuse nach Anspruch 1, wobei das Videokassettengehäuse (2) aus Papierkarton besteht.

6. Videokassettengehäuse nach Anspruch 5, wobei die Verstärkungsfolien (14) aus einem Weich-Polyvinylchlorid bestehen, das 30 bis 50% eines Plastifizierungsmittels enthält.

## Revendications

1. Enveloppe (2) de cassette vidéo qui a une forme sensiblement rectangulaire et qui présente une ouverture d'introduction de cassette (4) formée sur un de ses côtés,
caractérisée par des feuilles de renfort (14) laminées sur chacune des surfaces extérieures de l'enveloppe, les feuilles de renfort (14) étant de dimensions telles qu'elles laissent une marge non renforcée le long des zones de pliage (17) de l'enveloppe (2), et les feuilles de renfort (14) étant formées d'un matériau plus dur que l'enveloppe (2) elle-même.

2. Enveloppe de cassette vidéo selon la revendication 1, dans laquelle l'enveloppe (2) est réalisée en polypropylène.

3. Enveloppe de cassette vidéo selon la revendication 2, dans laquelle les feuilles de renfort (14) sont réalisées en chlorure de polyvinyle dur.

4. Enveloppe de cassette vidéo selon la revendication 3, dans laquelle le chlorure de polyvinyle dur contient environ 5 % d'agent plastifiant.

5. Enveloppe de cassette vidéo selon la revendication 1, dans laquelle l'enveloppe de cassette vidéo (2) est réalisée en carton.

6. Enveloppe de cassette vidéo selon la revendication 5, dans laquelle les feuilles de renfort (14) sont réalisées en chlorure de polyvinyle souple contenant de 30 à 50 % d'agent plastifiant.
